# EUROPÄISCHE PATENTANMELDUNG

(11) **EP 3 560 651 A1**
(43) Veröffentlichungstag der Anmeldung: **30.10.2019**
(21) Anmeldenummer: 18168725.2
(22) Anmeldetag: 23.04.2018
(51) Int. Cl.: B23K 26/70, B23K 37/00, B23K 26/08, F16P 1/06

(54) **MASCHINELLE ANORDNUNG ZUM BEARBEITEN VON WERKSTÜCKEN MITTELS LASER UND VERFAHREN ZUR HERSTELLUNG EINER DERARTIGEN MASCHINELLEN ANORDNUNG**

(71) Anmelder: TRUMPF Werkzeugmaschinen GmbH + Co. KG, 71254 Ditzingen (DE)
(72) Erfinder: HARNISCH, Gunter, 01936 Königsbrück (DE); KNOBEL, Carsten, 02689 Sohland (DE); PFEIFFER, Eduard, 01468 Moritzburg / OT Boxdorf (DE); WITTE, Robert, 02625 Bautzen (DE); TÖNZ, Roger, 7208 Malas (CH)
(74) Vertreter: Kohler Schmid Möbus Patentanwälte

(57) **Zusammenfassung**

Eine maschinelle Anordnung (1) zum Bearbeiten von Werkstücken mittels Laser weist eine Bearbeitungskabine (2) auf, die in einem Arbeitsraum (4) eine Laserbearbeitungsvorrichtung mit einem Arbeitsbereich aufnimmt. Eine Einhausung (3) der Bearbeitungskabine (2) begrenzt den Arbeitsraum (4) und schirmt die Umgebung der Bearbeitungskabine (2) gegen Laserstrahlung aus dem Arbeitsbereich der Laserbearbeitungsvorrichtung ab. An einer Einlassseite ist die Einhausung (3) der Bearbeitungskabine (2) mit einer Einlassöffnung versehen, durch welche mittels der Laserbearbeitungsvorrichtung bearbeitbare Werkstücke in einer Zufuhrrichtung (11) in den Arbeitsraum (4) einführbar sind und die einen sich senkrecht zu der Zufuhrrichtung (11) erstreckenden Einlassöffnungsquerschnitt aufweist. Der Arbeitsbereich der Laserbearbeitungsvorrichtung ist in Verlängerung der Einlassöffnung der Einhausung (3) in der Zufuhrrichtung (11) angeordnet. Für die Einlassöffnung der Einhausung (3) ist ein Verschlusselement vorgesehen, welches sich parallel zu dem Einlassöffnungsquerschnitt erstreckt und welches an der Einlassöffnung bei in einem Bearbeitungsmodus betriebener Laserbearbeitungsvorrichtung in einer Bearbeitungsposition angeordnet ist, in welcher das Verschlusselement für die Einlassöffnung einen als Werkstück-Durchtrittsquerschnitt vorgesehenen Teilquerschnitt des Einlassöffnungsquerschnitts freigibt. In der Zufuhrrichtung (11) ist der Einlassöffnung der Einhausung (3) eine Strahlenschutz-Einfriedung (17) vorgelagert, welche bei Bearbeitungsposition des Verschlusselements für die Einlassöffnung und im Bearbeitungsmodus betriebener Laserbearbeitungsvorrichtung die Umgebung der Bearbeitungskabine (2) gegen Laserstrahlung aus der Einlassöffnung abschirmt.

Im Rahmen eines Herstellungsverfahrens wird eine maschinelle Anordnung (1) der vorstehenden Art in modularer Bauweise gefertigt.

## Beschreibung

Die Erfindung betrifft eine maschinelle Anordnung zum Bearbeiten von Werkstücken mittels Laser, mit einer Bearbeitungskabine, die einen Arbeitsraum und eine Einhausung für den Arbeitsraum aufweist,
- wobei der Arbeitsraum der Bearbeitungskabine eine Laserbearbeitungsvorrichtung mit einem Arbeitsbereich aufnimmt, in welchem Werkstücke mittels der in einem Bearbeitungsmodus betriebenen Laserbearbeitungsvorrichtung unter Emission von Laserstrahlung bearbeitbar sind,
- wobei die Einhausung der Bearbeitungskabine den Arbeitsraum begrenzt und die Umgebung der Bearbeitungskabine gegen Laserstrahlung aus dem Arbeitsbereich der Laserbearbeitungsvorrichtung abschirmt,
- wobei die Einhausung der Bearbeitungskabine an einer Einlassseite mit einer Einlassöffnung versehen ist, durch welche mittels der Laserbearbeitungsvorrichtung bearbeitbare Werkstücke in einer Zufuhrrichtung in den Arbeitsraum einführbar sind und die einen sich senkrecht zu der Zufuhrrichtung erstreckenden Einlassöffnungsquerschnitt aufweist und
- wobei für die Einlassöffnung der Einhausung ein Verschlusselement vorgesehen ist, welches sich parallel zu dem Einlassöffnungsquerschnitt erstreckt und welches an der Einlassöffnung bei im Bearbeitungsmodus betriebener Laserbearbeitungsvorrichtung in einer Bearbeitungsposition angeordnet ist.

Die Erfindung betrifft außerdem ein Verfahren zur Herstellung einer maschinellen Anordnung der vorgenannten Art.

Aufgrund des Gefahrenpotentials von Laserstrahlung sind an maschinellen Anordnungen für die Laserbearbeitung von Werkstücken im Interesse des Arbeitsschutzes spezifische Sicherheitsvorkehrungen zu treffen. Dies gilt in besonderem Maße für Anlagen, im Falle derer der als Bearbeitungswerkzeug genutzte Laserstrahl von einem Festkörperlaser erzeugt wird, nachdem die von einem Festkörperlaser erzeugte Laserstrahlung aufgrund ihrer Wellenlänge für den Menschen besonders schädlich sein kann. Einschlägig in diesem Zusammenhang ist die Norm DIN EN 60825, die in Abhängigkeit von der Gefährlichkeit der erzeugten Laserstrahlung für den Menschen Laserklassen definiert und Grenzwerte für die maximal zulässige Bestrahlung von Personen mit Laserstrahlung ("MZB-Werte") festlegt.

Eine gattungsgemäße maschinelle Anordnung ist bekannt aus DE 10 2010 042 777 A1. Der Stand der Technik betrifft eine Laserschneidanordnung mit einer für Laserstrahlung undurchlässigen Kabine und mit mehreren Laserschneidvorrichtungen. Die Kabine nimmt wenigstens eine erste Laserschneidvorrichtung auf und ist an einer in der Kabinenwand ausgesparten Einlassöffnung mit einer Schleuse versehen. Ein inneres Schleusentor ist an der Kabinenwand in unmittelbarer Nachbarschaft der Einlassöffnung in vertikaler Richtung geführt und kann wahlweise in eine Offenstellung oder in eine Geschlossenstellung bewegt werden. In der Offenstellung gibt das innere Schleusentor den Einlassöffnungsquerschnitt frei, in der Geschlossenstellung verschließt das innere Schleusentor den Einlassöffnungsquerschnitt vollständig. Mit Abstand von der Kabine ist dem inneren Schleusentor ein äußeres Schleusentor der Schleuse vorgelagert. Auch das äußere Schleusentor kann wahlweise in eine Offenstellung oder in eine Geschlossenstellung bewegt werden. Zwischen dem äußeren Schleusentor und dem inneren Schleusentor ist im Innern der Schleuse eine weitere Laserschneidvorrichtung angeordnet. Während im Innern der Kabine ein Werkstück mittels einer ersten Laserschneidvorrichtung bearbeitet wird, ist die Einlassöffnung der Kabine durch das in die Geschlossenstellung bewegte innere Schleusentor der Schleuse vollständig verschlossen. In der Geschlossenstellung befindet sich das innere Schleusentor auch während des Schneidbetriebs der weiteren Laserschneidvorrichtung im Innern der Schleuse. In dem letztgenannten Fall ist zusätzlich auch das äußere Schleusentor in die Geschlossenstellung überführt. Während des Laserschneidbetriebs ist an der vorbekannten Laserschneidanordnung der Einlassöffnungsquerschnitt demnach zumindest mittels des inneren Schleusentors permanent vollständig verschlossen.

Die Aufgabe der vorliegenden Erfindung besteht darin, mit einem möglichst geringen konstruktiven Aufwand eine maschinelle Anordnung für die Laserbearbeitung von Werkstücken, insbesondere von Blechen, bereitzustellen, die in der Lage ist, auch Werkstücke mit Überformat zu bearbeiten.

Bei einem Werkstück mit Überformat handelt es sich im Sinne der vorliegenden Erfindung um ein Werkstück, dessen Abmessung in der Zufuhrrichtung größer ist als die entsprechende Abmessung des Arbeitsbereichs der für die Werkstückbearbeitung vorgesehenen Laserbearbeitungsvorrichtung. Etwa bei der schneidenden Laserbearbeitung von Blechen kann der Arbeitsbereich der Laserbearbeitungsvorrichtung durch den Verfahrweg eines Laserschneidkopfs der Laserbearbeitungsvorrichtung definiert sein.

Erfindungsgemäß gelöst wird die vorstehende Aufgabe durch die maschinelle Anordnung gemäß Patentanspruch 1 und durch das Herstellungsverfahren gemäß Patentanspruch 15.

Ausweislich Patentanspruch 1 ist an der erfindungsgemäßen maschinellen Anordnung der Arbeitsbereich der Laserbearbeitungsvorrichtung, beispielsweise der Arbeitsbereich einer Laserschneid- oder einer Laserschweißvorrichtung, in Verlängerung der an der Einhausung der Bearbeitungskabine vorgesehenen Einlassöffnung in der Zufuhrrichtung angeordnet. Gleichzeitig ist während der Laserbearbeitung im Innern der Einhausung das Verschlusselement für die Einlassöffnung der Einhausung in eine Bearbeitungsposition bewegt, in welcher das Verschlusselement für die Einlassöffnung einen als Werkstück-Durchtrittsquerschnitt vorgesehenen Teilquerschnitt des Einlassöffnungsquerschnitts freigibt. Infolgedessen kann ein Werkstück mit Überformat, das in dem Arbeitsbereich der Laserbearbeitungsvorrichtung durch letztere bearbeitet wird, die Einlassöffnung der Einhausung durchsetzen und durch die Einlassöffnung hindurch aus der Einhausung der Bearbeitungskabine in Gegenrichtung der Zufuhrrichtung herausragen. Das Verschlusselement an der Einlassöffnung der Bearbeitungskabine dichtet in der Bearbeitungsposition den Arbeitsraum der Bearbeitungskabine zumindest weitgehend gegen das Austreten von insbesondere bearbeitungsbedingter Laserstrahlung ab. Die Bearbeitungsposition des Verschlusselements und somit auch die Größe des von dem Verschlusselement freigelassenen Werkstück-Durchtrittsquerschnitts des Einlassöffnungsquerschnitts werden in Abstimmung auf die einschlägigen Maße des die Einlassöffnung durchsetzenden Werkstücks und unter Umständen auch des das Werkstück lagernden Werkstückträgers gewählt.

Unabhängig von der Länge der zu bearbeitenden Werkstücke in der Zufuhrrichtung muss die Einhausung der Bearbeitungskabine der erfindungsgemäßen maschinellen Anordnung in der Zufuhrrichtung nur derart bemessen sein, dass sie die Laserbearbeitungsvorrichtung und deren Arbeitsbereich aufnehmen kann. Die erfindungsgemäße maschinelle Anordnung kommt daher auch dann mit einer in der Zufuhrrichtung klein bauenden Einhausung aus, wenn im Arbeitsbereich der Laserbearbeitungsvorrichtung Werkstücke zu bearbeiten sind, deren Erstreckung in der Zufuhrrichtung die entsprechende Erstreckung des Arbeitsbereichs der Laserbearbeitungsvorrichtung übersteigt. Eine gewisse Überlänge gegenüber der Laserbearbeitungsvorrichtung und deren Arbeitsbereich ist für die Einhausung der erfindungsgemäßen maschinellen Anordnung denkbar, damit im Innern der Einhausung ein unmittelbar an den Arbeitsbereich der Laserbearbeitungsvorrichtung angrenzender Bereich für Bedien- und Wartungspersonal bereitgestellt wird. Keinesfalls muss die Einhausung der Bearbeitungskabine der erfindungsgemäßen maschinellen Anordnung in der Zufuhrrichtung ebenso oder sogar noch größer bemessen sein als zu bearbeitende überformatige Werkstücke, deren Abmessung in der Zufuhrrichtung ein Mehrfaches der Abmessung des Arbeitsbereichs der Laserbearbeitungsvorrichtung betragen kann.

Im Rahmen des erfindungsgemäßen Herstellungsverfahrens wird eine erfindungsgemäße maschinelle Anordnung gefertigt, die in Modulbauweise ausgeführt ist. Ein Einlassmodul der Bearbeitungskabine, das jedenfalls einen mit der Einlassöffnung versehenen Teil der Einhausung der Bearbeitungskabine umfasst und/oder ein Auslassmodul der Bearbeitungskabine zumindest mit einem eine Auslassöffnung umfassenden Teil der Einhausung wird wahlweise mit einem von mehreren Bearbeitungsmodulen der Bearbeitungskabine kombiniert. Die Bearbeitungsmodule sind zu dem Einlassmodul hin und/oder zu dem Auslassmodul hin offen und umfassen denjenigen Teil der Einhausung der Bearbeitungskabine, welcher zumindest die Laserbearbeitungsvorrichtung und deren Arbeitsbereich beherbergt. In das Bearbeitungsmodul oder alternativ in das Einlassmodul und/oder in das Auslassmodul kann ein an die Laserbearbeitungsvorrichtung und deren Arbeitsbereich angrenzender Bereich für Bedienungs- und/oder Wartungspersonal integriert sein. Die zur Auswahl stehenden Bearbeitungsmodule sind in der Zufuhrrichtung unterschiedlich bemessen und folglich geeignet, Arbeitsbereiche mit mehr oder weniger großer Länge in der Zufuhrrichtung aufzunehmen. Praxisrelevant sind beispielsweise Arbeitsbereiche mit einer Länge von vier Metern oder sechs Metern bei einer einheitlichen Breite von zwei Metern.

In Abhängigkeit von der geplanten Anwendung der zu fertigenden maschinellen Anordnung kann ein konfektioniertes Bearbeitungsmodul mit größerer oder kleinerer Erstreckung in der Zufuhrrichtung mit einem unabhängig von der Länge des Arbeitsbereichs dimensionierten und gleichfalls konfektionierten Einlassmodul und/oder mit einem ebenfalls unabhängig von der Länge des Arbeitsbereichs dimensionierten und konfektionierten Auslassmodul kombiniert werden. Dadurch ermöglicht das erfindungsgemäße Verfahren die fertigungstechnisch einfache Herstellung von erfindungsgemäßen maschinellen Anordnungen für unterschiedliche Bearbeitungsaufgaben.

Überformatige Werkstücke, die in der Zufuhrrichtung über eine Länge zu bearbeiten sind, die größer ist als die Erstreckung des Arbeitsbereichs der Laserbearbeitungsvorrichtung in der Zufuhrrichtung, werden an der erfindungsgemäßen maschinellen Anordnung durch die Einlassöffnung gegenüber dem Arbeitsbereich der Laserbearbeitungsvorrichtung in der Zufuhrrichtung nachgesetzt. Zur Erzeugung der auszuführenden Werkstückbewegungen kann erfindungsgemäß eine herkömmliche maschinelle Werkstück-Vorschubvorrichtung vorgesehen sein, beispielsweise eine Werkstückpalette, die ein zu bearbeitendes überformatiges Werkstück lagert und gemeinsam mit diesem mittels eines numerisch gesteuerten motorischen Antriebs in der Zufuhrrichtung durch die Einlassöffnung der Einhausung der maschinellen Anordnung in den Arbeitsbereich der Laserbearbeitungsvorrichtung bewegt und bei Bedarf gegenüber dem Arbeitsbereich in der Zufuhrrichtung zugestellt werden kann. Die Werkstück-Vorschubvorrichtung kann auch genutzt werden, um ein Werkstück nach der Bearbeitung entgegen der Zufuhrrichtung aus dem Innern der Bearbeitungskabine der erfindungsgemäßen maschinellen Anordnung zu entnehmen.

Nachdem an der erfindungsgemäßen maschinellen Anordnung das Verschlusselement für die Einlassöffnung der Bearbeitungskabine in der Bearbeitungsposition einen Werkstück-Durchtrittsquerschnitt für ein in dem Arbeitsbereich der Laserbearbeitungsvorrichtung bearbeitbares Werkstück und unter Umständen für einen Werkstückträger, insbesondere eine Werkstückpalette, freilässt und nachdem nicht völlig auszuschließen ist, dass bei der Laserbearbeitung im Innern der Einhausung emittierte Laserstrahlung durch den Werkstück-Durchtrittsquerschnitt des Einlassöffnungsquerschnitts aus der Bearbeitungskabine austritt, ist an der erfindungsgemäßen maschinellen Anordnung der Einlassöffnung der Einhausung in der Zufuhrrichtung eine einlassseitige Strahlenschutz-Einfriedung vorgelagert, welche bei Bearbeitungsposition des für die Einlassöffnung vorgesehenen Verschlusselements und bei im Bearbeitungsmodus betriebener Laserbearbeitungsvorrichtung die Umgebung der Bearbeitungskabine gegen Laserstrahlung aus dem Innern der Bearbeitungskabine abschirmt. Die einlassseitige Strahlenschutz-Einfriedung gewährleistet insbesondere bei Einsatz von Laserbearbeitungsvorrichtungen, deren Bearbeitungsstrahl von einem Festkörperlaser erzeugt wird, die erforderliche Arbeitssicherheit in der Umgebung der erfindungsgemäßen maschinellen Anordnung.

Anders als die Bearbeitungskabine weist die einlassseitige Strahlenschutz-Einfriedung der erfindungsgemäßen maschinellen Anordnung der Einfachheit halber kein Dach auf. Bei der Strahlenschutz-Einfriedung handelt es sich vielmehr um einen konstruktiv einfachen wandartigen Strahlenschutz, dessen Beschaffenheit, insbesondere dessen Abmessungen, auf einfache Art und Weise auf unterschiedliche Bearbeitungsaufgaben abgestimmt werden kann. Etwa durch entsprechende Wahl der Länge der Strahlenschutz-Einfriedung kann die erfindungsgemäße maschinelle Anordnung auf fertigungstechnisch einfache Art und Weise an unterschiedlich große Überformate der zu bearbeitenden Werkstücke und deren Werkstückträger beziehungsweise Werkstückpalette angepasst werden. Bei entsprechender Bauweise lässt sich die einlassseitige Strahlenschutz-Einfriedung nach Art eines Einfriedungsmoduls mit den übrigen Komponenten der erfindungsgemäßen maschinellen Anordnung kombinieren.

Besondere Ausführungsarten der erfindungsgemäßen maschinellen Anordnung gemäß Patentanspruch 1 ergeben sich aus den abhängigen Patentansprüchen 2 bis 14.

Die Erfindungsbauart gemäß Patentanspruch 2 ist für Bearbeitungsfälle gedacht, in denen ein mittels der Laserbearbeitungsvorrichtung bearbeitetes Werkstück den Arbeitsbereich der Laserbearbeitungsvorrichtung in der Zufuhrrichtung passiert, beispielsweise weil das Werkstück über eine Länge in der Zufuhrrichtung zu bearbeiten ist, welche größer ist als die Länge des Arbeitsbereichs der Laserbearbeitungsvorrichtung. Nach dem Passieren des Arbeitsbereichs kann das Werkstück, unter Umständen gemeinschaftlich mit dem das Werkstück lagernden Werkstückträger, durch die zu diesem Zweck vorgesehene Auslassöffnung der Einhausung der Bearbeitungskabine in der Zufuhrrichtung aus der Bearbeitungskabine herausragen. Ein für die Auslassöffnung der Einhausung vorgesehenes Verschlusselement ist dabei in einer Bearbeitungsposition angeordnet, in welcher es entsprechend dem Verschlusselement an der Einlassöffnung der Einhausung einen Werkstück-Durchtrittsquerschnitt der Auslassöffnung freigibt. Aus den vorgenannten Gründen ist der Auslassöffnung der Einhausung in der Zufuhrrichtung eine auslassseitige Strahlenschutz-Einfriedung nachgelagert. Die Strahlenschutz-Einfriedung an der Auslassöffnung der Bearbeitungskabine kann mit der Strahlenschutz-Einfriedung an der Einlassöffnung der Bearbeitungskabine hinsichtlich Konstruktion und Funktionsweise übereinstimmen.

Die maschinelle Anordnung gemäß Patentanspruch 3 berücksichtigt die geltenden Arbeitsschutzbestimmungen, insbesondere die Vorgaben der Norm DIN EN 60825. Das Verschlusselement für die Einlassöffnung der Einhausung ist dem Arbeitsbereich der Laserbearbeitungsvorrichtung in der Zufuhrrichtung mit einem Abstand vorgelagert, welcher derart bemessen ist, dass den Sicherheitsanforderungen an die Standzeit des Verschlusselements für die Einlassöffnung entsprochen wird. Entsprechend ist das Verschlusselement für die Auslassöffnung der Einhausung dem Arbeitsbereich der Laserbearbeitungsvorrichtung in der Zufuhrrichtung mit einem Abstand nachgelagert, aufgrund dessen den Sicherheitsanforderungen an die Standzeit des Verschlusselements für die Auslassöffnung entsprochen wird. Bei modularer Bauweise der erfindungsgemäßen maschinellen Anordnung kann der auf das Einlassmodul entfallende Teil der Einhausung und/oder der auf das Auslassmodul entfallende Teil der Einhausung in der Zufuhrrichtung eine entsprechende Länge aufweisen.

Ausweislich Patentanspruch 4 ist in Weiterbildung der Erfindung der von dem betreffenden Verschlusselement freigelassene Werkstück-Durchtrittsquerschnitt an der Einlassöffnung und/oder der Werkstück-Durchtrittsquerschnitt an der Auslassöffnung der erfindungsgemäßen maschinellen Anordnung derart bemessen, dass die Einlassöffnung beziehungsweise die Auslassöffnung der Einhausung bei Bearbeitungsposition des jeweiligen Verschlusselements nicht nur von dem bearbeiteten Werkstück sondern zusätzlich auch von einem das Werkstück lagernden Werkstückträger, insbesondere von einer Werkstückpalette, durchsetzt werden kann.

In weiterer bevorzugter Ausgestaltung der Erfindung ist in der Zufuhrrichtung zwischen der Einlassöffnung der Einhausung der Bearbeitungskabine und dem Arbeitsbereich der Laserbearbeitungsvorrichtung und/oder zwischen dem Arbeitsbereich der Laserbearbeitungsvorrichtung und der Auslassöffnung der Einhausung eine Werkstück-Führungsvorrichtung vorgesehen, mittels derer ein in dem Arbeitsbereich der Laserbearbeitungsvorrichtung bearbeitbares Werkstück bei in der Zufuhrrichtung und/oder in Gegenrichtung ausgeführten Werkstückbewegungen geführt ist (Patentanspruch 5). Die Führungsvorrichtung kann das Werkstück unmittelbar führen. Erfindungsgemäß bevorzugt wird eine Führung für einen Werkstückträger, insbesondere eine Werkstückpalette, wobei die Führungsvorrichtung beispielsweise von Führungsschienen für den Werkstückträger beziehungsweise die Werkstückpalette gebildet sein kann. An einer modular aufgebauten maschinellen Anordnung der erfindungsgemäßen Art kann die Führungsvorrichtung zwischen der Einlassöffnung und/oder der Auslassöffnung der Einhausung der Bearbeitungskabine einerseits und dem Arbeitsbereich der Laserbearbeitungsvorrichtung andererseits in das Einlassmodul beziehungsweise in das Auslassmodul der Bearbeitungskabine integriert sein.

Im Interesse einer maximalen Abschirmung der Umgebung der Bearbeitungskabine gegen bearbeitungsbedingte Laserstrahlung ist an der erfindungsgemäßen maschinellen Anordnung gemäß Patentanspruch 6 vorgesehen, dass das Verschlusselement für die Einlassöffnung der Einhausung und/oder das Verschlusselement für die Auslassöffnung der Einhausung in der Bearbeitungsposition mit einem zu dem Werkstück-Durchtrittsquerschnitt hin liegenden Rand auf dem den Werkstück-Durchtrittsquerschnitt durchsetzenden Werkstück aufsetzt.

Als Verschlusselement bevorzugt wird erfindungsgemäß ein herkömmlicher Strahlenschutzvorhang, der sich parallel zu dem Einlassöffnungsquerschnitt erstreckt und/oder ein herkömmlicher, parallel zu dem Auslassöffnungsquerschnitt verlaufender Strahlenschutzvorhang (Patentanspruch 7). Zusätzlich zu dem Strahlenschutzvorhang können bei Bedarf Bürstenleisten und/oder Labyrinthdichtungen als Strahlenschutzelemente vorgesehen sein.

Insbesondere bei Verwendung eines Verschlusselements mit einem in der Zufuhrrichtung nachgiebigen Strahlenschutzvorhang kann das Verschlusselement in der Bearbeitungsposition verbleiben, wenn ein die Einlassöffnung und/oder die Auslassöffnung der Einhausung durchsetzendes Werkstück unter Umständen gemeinschaftlich mit einem zur Werkstücklagerung vorgesehenen Werkstückträger in der Zufuhrrichtung und/oder in der Gegenrichtung gegenüber dem Arbeitsbereich der Laserbearbeitungsvorrichtung zugestellt wird.

Bevorzugtermaßen ist die erfindungsgemäße maschinelle Anordnung aber gemäß Patentanspruch 8 ausgebildet. Im Falle dieser Erfindungsbauart ist als weitere Position für das Verschlusselement für die Einlassöffnung der Bearbeitungskabine und/oder als weitere Position für das Verschlusselement für die Auslassöffnung der Bearbeitungskabine eine Werkstück-Transferposition vorgesehen. In der Werkstück-Transferposition gibt das Verschlusselement einen als Werkstück-Transferquerschnitt vorgesehenen Teilquerschnitt des Einlassöffnungsquerschnitts oder des Auslassöffnungsquerschnitts frei, der größer bemessen ist als der jeweilige Werkstück-Durchtrittsquerschnitt. Nach Überführung des Verschlusselements in die Werkstück-Transferposition wird das Werkstück, unter Umständen gemeinsam mit dem Werkstückträger, in der Zufuhrrichtung bewegt. Die Laserbearbeitungsvorrichtung im Innern der Einhausung ist dabei vorzugsweise ausgeschaltet.

In weiterer bevorzugter Ausgestaltung der erfindungsgemäßen maschinellen Anordnung ist ausweislich Patentanspruch 9 als weitere Position für das Verschlusselement für die Einlassöffnung der Einhausung und/oder als weitere Position für das Verschlusselement für die Auslassöffnung der Einhausung eine Verschlussposition vorgesehen, in welcher das Verschlusselement den Einlassöffnungsquerschnitt beziehungsweise den Auslassöffnungsquerschnitt vollständig und vorzugsweise strahlungsdicht verschließt. Bei Verschlussposition des oder der Verschlusselemente können mittels der erfindungsgemäßen maschinellen Anordnung beispielsweise auf herkömmliche Weise Werkstückformate bearbeitet werden, welche in der Zufuhrrichtung die Abmessungen des Arbeitsbereichs der Laserbearbeitungsvorrichtung nicht übersteigen.

Zur Überführung des Verschlusselements an der Einlassöffnung der Einhausung der Bearbeitungskabine und/oder des Verschlusselements an der Auslassöffnung der Einhausung der Bearbeitungskabine ist in bevorzugter Ausgestaltung der erfindungsgemäßen maschinellen Anordnung ein (numerisch) gesteuerter motorischer Hubantrieb vorgesehen.

Patentanspruch 10 betrifft die in vorteilhafter Ausgestaltung der Erfindung vorgesehene Beschaffenheit der Strahlenschutz-Einfriedung an der Einlassseite und/ oder an der Auslassseite der Bearbeitungskabine. Die Strahlenschutz-Einfriedung begrenzt erfindungsgemäß einen Einfriedungsraum, der zu der Einlassöffnung der Einhausung beziehungsweise zu der Auslassöffnung der Einhausung der Bearbeitungskabine hin offen ist. Insbesondere während der Bearbeitung nimmt der Einfriedungsraum den außerhalb der Bearbeitungskabine angeordneten Teil eines überformatigen Werkstücks auf, unter Umständen auch den außerhalb der Bearbeitungskabine angeordneten Teil eines Werkstückträgers beziehungsweise einer Werkstückpalette. Der Einfriedungsraum wird jeweils von zwei flächigen seitlichen Einfriedungsteilen und wenigstens einem flächigen stirnseitigen Einfriedungsteil begrenzt. Die seitlichen Einfriedungsteile verlaufen mit in der Querrichtung der Zufuhrrichtung bestehendem gegenseitigem Abstand beidseits der Einlassöffnung oder der Auslassöffnung parallel zu der Zufuhrrichtung. Der stirnseitige Einfriedungsteil erstreckt sich jeweils mit längs der Zufuhrrichtung bestehendem Abstand von der Einlassöffnung oder der Auslassöffnung zwischen den seitlichen Einfriedungsteilen senkrecht zu der Zufuhrrichtung.

In bevorzugter Ausgestaltung der Erfindung ist der stirnseitige Einfriedungsteil der Strahlenschutz-Einfriedung mit einer Durchtrittsöffnung versehen, die in der Zufuhrrichtung auf einer Linie mit der Einlassöffnung und/oder auf einer Linie mit der Auslassöffnung der Bearbeitungskabine liegt (Patentanspruch 11). Durch die Durchtrittsöffnung des stirnseitigen Teils der einlassseitigen Strahlschutz-Einfriedung kann ein in dem Arbeitsbereich der Laserbearbeitungsvorrichtung bearbeitbares Werkstück in den einlassseitigen Einfriedungsraum eingeführt werden. Durch die Durchtrittsöffnung des stirnseitigen Teils der auslassseitigen Strahlenschutz-Einfriedung kann ein Werkstück aus dem auslassseitigen Einfriedungsraum in der Zufuhrrichtung herausragen. Aufgrund der Durchtrittsöffnung an dem stirnseitigen Einfriedungsteil ist es nicht erforderlich, dass sich die jeweilige Strahlenschutz-Einfriedung in der Zufuhrrichtung über die gesamte Länge erstreckt, über die ein in dem Einfriedungsraum der Strahlenschutz-Einfriedung aufgenommenes überformatiges Werkstück außerhalb der Bearbeitungskabine der erfindungsgemäßen maschinellen Anordnung angeordnet ist. Die aus Gründen des Strahlenschutzes unbedingt erforderliche Mindest-Baulänge der Strahlenschutz-Einfriedung in der Zufuhrrichtung kann dadurch vorteilhafterweise verhältnismäßig klein gehalten werden.

In weiterer bevorzugter Ausgestaltung der Erfindung ist ausweislich Patentanspruch 12 für die Durchtrittsöffnung des stirnseitigen Einfriedungsteils der einlassseitigen Strahlenschutz-Einfriedung und/oder für die Durchtrittsöffnung des stirnseitigen Einfriedungsteils der auslassseitigen Strahlenschutz-Einfriedung ein Verschlusselement mit einem Strahlenschutzvorhang vorgesehen, der sich parallel zu einem senkrecht zu der Zufuhrrichtung verlaufenden Durchtrittsöffnungsquerschnitt erstreckt und der in der Zufuhrrichtung und/oder in Gegenrichtung nachgiebig ist. Der Strahlenschutzvorhang an der Durchtrittsöffnung des betreffenden stirnseitigen Einfriedungsteils schirmt die Umgebung der erfindungsgemäßen maschinellen Anordnung fortlaufend gegen bearbeitungsbedingte Laserstrahlung ab. Aufgrund seiner Nachgiebigkeit in der Zufuhrrichtung und/oder in Gegenrichtung behindert der Strahlenschutzvorhang in der Zufuhrrichtung oder in Gegenrichtung ausgeführte Werkstückbewegungen nicht und kann folglich bei Werkstückbewegungen seine Position an der jeweiligen Durchtrittsöffnung dauerhaft beibehalten.

Als Strahlenschutz-Einfriedung an der Einlassöffnung und/oder als Strahlenschutz-Einfriedung an der Auslassöffnung der Bearbeitungskabine der erfindungsgemäßen maschinellen Anordnung kommt beispielsweise eine den jeweiligen Einfriedungsraum lückenlos umschließende Strahlenschutzwand in Frage, die insbesondere aus einem strahlungsdichten Glas und/oder aus einem strahlungsdichten Kunststoff bestehen kann.

Im Interesse konstruktiv möglichst einfacher Verhältnisse kann die Strahlenschutz-Einfriedung an der Einlassöffnung und/oder die Strahlenschutz-Einfriedung an der Auslassöffnung der Bearbeitungskabine der erfindungsgemäßen maschinellen Anordnung wenigstens teilweise nach Art eines Zauns ausgebildet sein mit Einfriedungselementen, die in Umfangsrichtung der Strahlenschutz-Einfriedung aufeinanderfolgen.

Damit die erforderliche Abschirmungswirkung der Strahlenschutz-Einfriedung ungeachtet einer zaunartigen Bauweise der Strahlenschutz-Einfriedung erzielt wird, ist gemäß Patentanspruch 13 in bevorzugter Ausgestaltung der Erfindung vorgesehen, dass die der Einlassöffnung der Einhausung vorgelagerte Strahlenschutz-Einfriedung und/oder die der Auslassöffnung der Einhausung nachgelagerte Strahlenschutz-Einfriedung Einfriedungselemente aufweist, die senkrecht zu der Umfangsrichtung der Strahlenschutz-Einfriedung gegeneinander versetzt sind und in der Umfangsrichtung der Strahlenschutz-Einfriedung miteinander überlappen. Aufgrund des senkrecht zu der Umfangsrichtung bestehenden gegenseitigen Abstands der Einfriedungselemente kann der Einfriedungsraum der betreffenden Strahlenschutz-Einfriedung von außerhalb der Strahlenschutz-Einfriedung eingesehen werden. Dessen ungeachtet gewährleistet die gleichzeitig in der Umfangsrichtung bestehende gegenseitige Überlappung der Einfriedungselemente eine wirksame Abschirmung der Umgebung der Strahlenschutz-Einfriedung gegen bearbeitungsbedingte Laserstrahlung.

Ergänzend oder alternativ kann in Weiterbildung der erfindungsgemäßen maschinellen Anordnung eine Strahlenschutz-Einfriedung vorgesehen sein, die über einen Teil ihrer Höhe mit einer in Umfangsrichtung der Strahlenschutz-Einfriedung verlaufenden strahlungsdichten Sichtblende versehen ist. Die Höhe der Sichtblende ist gegebenenfalls derart bemessen, dass an der Einlassöffnung beziehungsweise an der Auslassöffnung der Einhausung der Bearbeitungskabine austretende Laserstrahlung den Einfriedungsraum des Laserschutzzauns nicht verlassen kann.

Patentanspruch 14 betrifft eine erfindungsgemäße maschinelle Anordnung in Modulbauweise mit den vorstehend bereits gewürdigten fertigungstechnischen Vorteilen. Auch die einlassseitige und/oder die auslassseitige Strahlenschutz-Einfriedung kann ein Modul der Gesamtanordnung ausbilden.

Nachfolgend wird die Erfindung anhand beispielhafter schematischer Darstellungen näher erläutert. Es zeigen:
- Figur 1:: eine maschinelle Anordnung zum Laserschneiden von Blechen, mit einer Bearbeitungskabine in Modulbau-weise, mit zwei Laserschutzwänden erster Bauart und mit einem Palettenwechsler,
- Figur 2:: die Bearbeitungskabine gemäß Figur 1 mit voneinan-der getrennten Modulen,
- Figur 3:: ein Einlassmodul der Bearbeitungskabine gemäß den Figuren 1 und 2 mit einem Verschlusselement für eine Einlassöffnung,
- Figuren 4a bis 4c:: Darstellungen zur Veranschaulichung der Funktions-weise des Einlassmoduls gemäß Figur 3 mit dem Ver-schlusselement für die Einlassöffnung in drei unter-schiedlichen Positionen sowie
- Figur 5:: eine maschinelle Anordnung zum Laserschneiden von Blechen, mit der Bearbeitungskabine und dem Palet-tenwechsler gemäß Figur 1 und mit zwei Laserschutz-wänden zweiter Bauart.

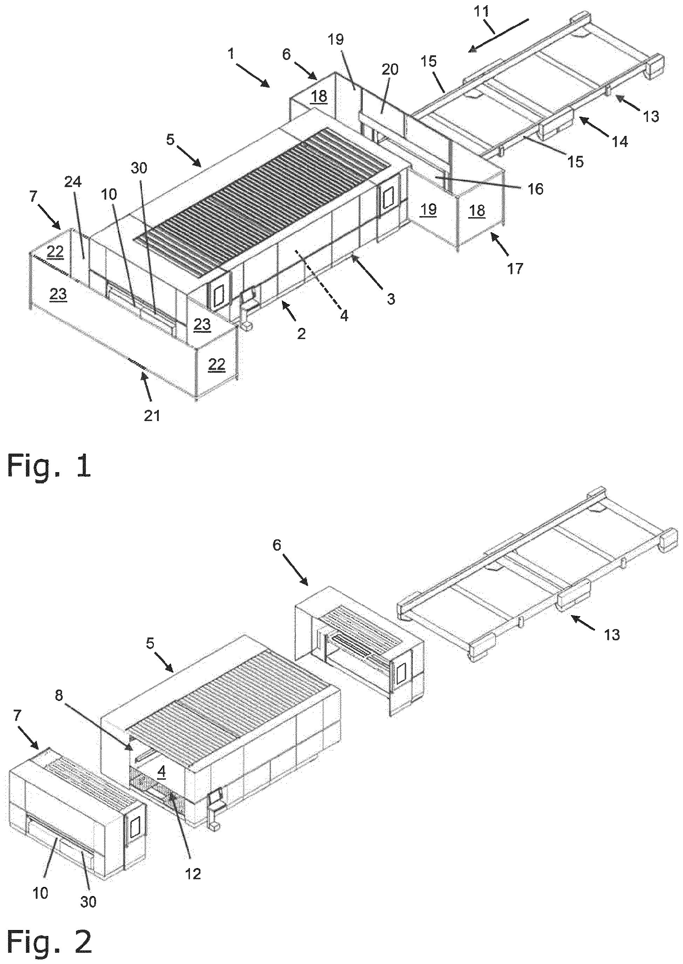

Gemäß den Figuren 1 und 2 weist eine maschinelle Anordnung 1 zum Laserschneiden von Blechen eine Bearbeitungskabine 2 mit einer Einhausung 3 auf.

Die Einhausung 3 umschließt einen in ihrem Inneren ausgebildeten Arbeitsraum 4 der Bearbeitungskabine 2 an dessen Längs- und Querseiten sowie nach oben hin. Die Bearbeitungskabine 2 ist in modularer Bauweise ausgeführt und setzt sich zusammen aus einem Bearbeitungsmodul 5, einem Einlassmodul 6 und einem Auslassmodul 7.

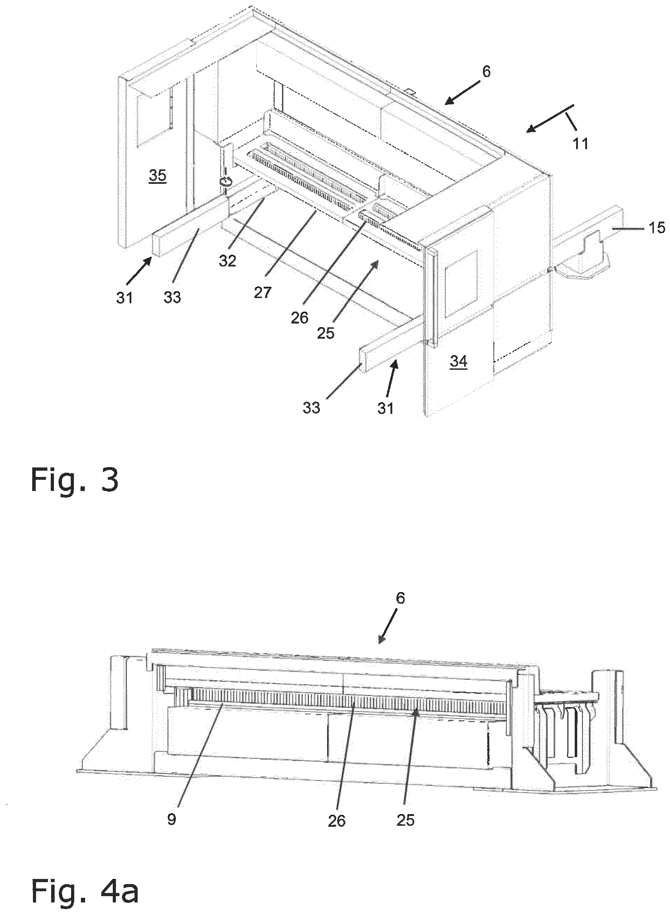

An dem Bearbeitungsmodul 5 ist in dem Arbeitsraum 4 der Bearbeitungskabine 2 als Laserbearbeitungsvorrichtung für die schneidende Blechbearbeitung eine herkömmliche Laser-Flachbettmaschine 8 angeordnet. An dem Einlassmodul 6 ist die Einhausung 3 der Bearbeitungskabine 2 mit einer nur in den Figuren 4a bis 4c sichtbaren, ansonsten verdeckten Einlassöffnung 9 versehen. Entsprechend weist die Einhausung 3 der Bearbeitungskabine 2 an dem Auslassmodul 7 eine Auslassöffnung 10 auf.

Ein der Übersichtlichkeit halber nicht dargestelltes Blech wird der im Inneren der Bearbeitungskabine 2 angeordneten Laser-Flachbettmaschine 8 in einer in Figur 1 durch einen Pfeil veranschaulichten Zufuhrrichtung 11 zur Bearbeitung zugeführt. Dabei gelangt das zu bearbeitende Blech in einen Arbeitsbereich 12 der Laser-Flachbettmaschine 8, der in Verlängerung der Einlassöffnung 9 der Einhausung 3 in der Zufuhrrichtung 11 angeordnet ist und der sich in der Zufuhrrichtung 11 über die gesamte Länge des Bearbeitungsmoduls 5 der Bearbeitungskabine 2 erstreckt. Zur schneidenden Blechbearbeitung bewegt sich ein Laserschneidkopf der Laser-Flachbettmaschine 8 in bekannter Weise mit einer parallel zu einer horizontalen Bearbeitungsebene ausgeführten zweiachsigen Schneidbewegung über das während des Schneidbetriebs der Laser-Flachbettmaschine 8 stationäre Blech.

In den Arbeitsbereich 12 der Laser-Flachbettmaschine 8 gelangt ein zu bearbeitendes Blech ausgehend von einem in den Figuren 1 und 2 gezeigten Palettenwechsler 13 herkömmlicher Bauart. Der Palettenwechsler 13 umfasst eine rahmenartige Trag- und Führungsstruktur 14 an deren Längsseiten Führungsschienen 15 in der Zufuhrrichtung 11 verlaufen.

Die Trag- und Führungsstruktur 14 lagert eine in den Figuren nicht gezeigte herkömmliche Werkstückpalette, die nach dem Beladen mit einem zu bearbeitenden Blech gemeinschaftlich mit diesem mittels eines üblichen Kettenantriebs ausgehend von einer Startposition am hinteren Ende des Palettenwechslers 13 in der Zufuhrrichtung 11 bewegt wird. Palettenseitige Rollen laufen dabei auf den Führungsschienen 15 der Trag- und Führungsstruktur 14. Auf diese Art und Weise werden die Werkstückpalette und das von dieser gelagerte Werkstück in der Zufuhrrichtung 11 geführt.

Die Führungsschienen 15 des Palettenwechslers 13 sind in der Zufuhrrichtung 11 bis an die Bearbeitungskabine 2 verlängert, im Einzelnen bis an das Einlassmodul 6 der Bearbeitungskabine 2. Dabei durchsetzen die Führungsschienen 15 eine Durchtrittsöffnung 16 an einer als Strahlenschutz-Einfriedung vorgesehenen einlassseitigen Laserschutzwand 17, welche der Einlassöffnung 9 an der Einhausung 3 der Bearbeitungskabine 2 in der Zufuhrrichtung 11 vorgelagert ist. Die Einlassöffnung 9 der Einhausung 3 ist dabei in Verlängerung der Durchtrittsöffnung 16 der einlassseitigen Laserschutzwand 17 in der Zufuhrrichtung 11 angeordnet.

Mit seitlichen Einfriedungsteilen beziehungsweise Wandelementen 18 und mit stirnseitigen Einfriedungsteilen beziehungsweise Wandelementen 19 begrenzt die einlassseitige Laserschutzwand 17 einen einlassseitigen Einfriedungsraum 20. Die Durchtrittsöffnung 16 ist an dem in der Zufuhrrichtung 11 vorderen stirnseitigen Wandelement 19 der einlassseitigen Laserschutzwand 17 vorgesehen. Der einlassseitige Einfriedungsraum 20 ist nach oben und zu der Einlassöffnung 9 an der Einhausung 3 der Bearbeitungskabine 2 hin offen. Sowohl die seitlichen Wandelemente 18 als auch die stirnseitigen Wandelemente 19 der in Figur 1 dargestellten einlassseitigen Laserschutzwand 17 bestehen in dem dargestellten Beispielsfall aus für Laserstrahlung undurchlässigem Material, beispielsweise aus einem entsprechenden Schutzglas.

Für die Durchtrittsöffnung 16 an dem in der Zufuhrrichtung 11 vorderen stirnseitigen Wandelement 19 der einlassseitigen Laserschutzwand 17 ist ein der Einfachheit halber nicht dargestelltes und als herkömmlicher Laserschutzvorhang vorgesehenes Verschlusselement vorgesehen. Der strahlungsdichte Laserschutzvorhang überdeckt die Durchtrittsöffnung 16 vollständig. In der Zufuhrrichtung 11 ist der Laserschutzvorhang an der Durchtrittsöffnung 16 nachgiebig, so dass er von einer mit einem Blech beladenene Werkstückpalette passiert werden kann, ohne dass er zu diesem Zweck angehoben werden müsste.

An der von der Einlassseite abliegenden Seite der Bearbeitungskabine 2 ist als weitere Strahlenschutz-Einfriedung eine auslassseitige Laserschutzwand 21 vorgesehen, welche der Auslassöffnung 10 der Einhausung 3 der Bearbeitungskabine 2 in der Zufuhrrichtung 11 nachgelagert ist und die hinsichtlich ihrer Beschaffenheit weitestgehend mit der einlassseitigen Laserschutzwand 17 übereinstimmt. Als Einfriedungsteile vorgesehene seitliche Wandelemente 22 und stirnseitige Wandelemente 23 begrenzen einen nach oben und zu der Auslassöffnung 10 der Einhausung 3 der Bearbeitungskabine 2 hin offenen auslassseitigen Einfriedungsraum 24. Anders als die einlassseitige Laserschutzwand 17 ist die auslassseitige Laserschutzwand 21 allerdings an dem von der Bearbeitungskabine 2 beabstandeten stirnseitigen Wandelement 23 nicht mit einer Durchtrittsöffnung für ein Blech bzw. für eine mit einem Blech beladene Werkstückpalette versehen. Darüber hinaus ist in dem auslassseitigen Einfriedungsraum 24 keine Führung für eine Werkstückpalette beziehungsweise ein von einer Werkstückpalette gelagertes Blech vorgesehen.

Eine mit einem zu bearbeitenden Blech beladene Werkstückpalette erreicht bei ihrer Bewegung in der Zufuhrrichtung 11 nach dem Passieren der Durchtrittsöffnung 16 der einlassseitigen Laserschutzwand 17 und des einlassseitigen Einfriedungsraums 20 die Einlassöffnung 9 an dem Einlassmodul 6 der Bearbeitungskabine 2.

Ausweislich der Figuren 3 und 4a bis 4c ist für die Einlassöffnung 9 der Bearbeitungskabine 2 als Verschlusselement ein Strahlenschutzvorhang in Form eines herkömmlichen einlassseitigen Laserschutzvorhangs 25 vorgesehen. Der einlassseitige Laserschutzvorhang 25 umfasst aus einem strahlungsdichten Material gefertigte vertikale Lamellen 26, die in zwei in der Zufuhrrichtung 11 gegeneinander versetzten und parallel zueinander verlaufenden Reihen angeordnet sind. Dabei sind die Lamellen 26 der beiden Lamellenreihen in deren Längsrichtung derart gegeneinander versetzt, dass - in der Zufuhrrichtung 11 betrachtet - eine Lamelle 26 der einen Lamellenreihe die Trennlinie zwischen zwei einander benachbarten Lamellen 26 der anderen Lamellenreihe überdeckt.

Mit ihren oberen Enden sind die Lamellen 26 des einlassseitigen Laserschutzvorhangs 25 an einem Lamellenhalter 27 befestigt, der an der Einhausung 3 der Bearbeitungskabine 2 heb- und senkbar geführt ist. Der untere Rand der Lamellen 26 ist in der Zufuhrrichtung 11 und in Gegenrichtung frei beweglich.

Der Abstand des Laserschutzvorhangs 25 an der Einlassöffnung 9 der Einhausung 3 von dem Arbeitsbereich 12 der Laser-Flachbettmaschine 8 in der Zufuhrrichtung 11 ist derart bemessen und das Material des Laserschutzvorhangs 25 ist derart gewählt, dass der an der Einlassöffnung 9 vorgesehene Laserschutzvorhang 25 die durch die einschlägigen Sicherheitsvorschriften geforderte Standzeit erreicht.

Mittels eines nicht gezeigten motorischen Antriebs kann der einlassseitige Laserschutzvorhang 25 in vertikaler Richtung in drei verschiedene Positionen zugestellt werden.

In Figur 4a ist der einlassseitige Laserschutzvorhang 25 in eine Verschlussposition bewegt, in welcher er den senkrecht zu der Zufuhrrichtung 11 verlaufenden Einlassöffnungsquerschnitt der Einlassöffnung 9 der Bearbeitungskabine 2 vollständig und dabei strahlungsdicht verschließt.

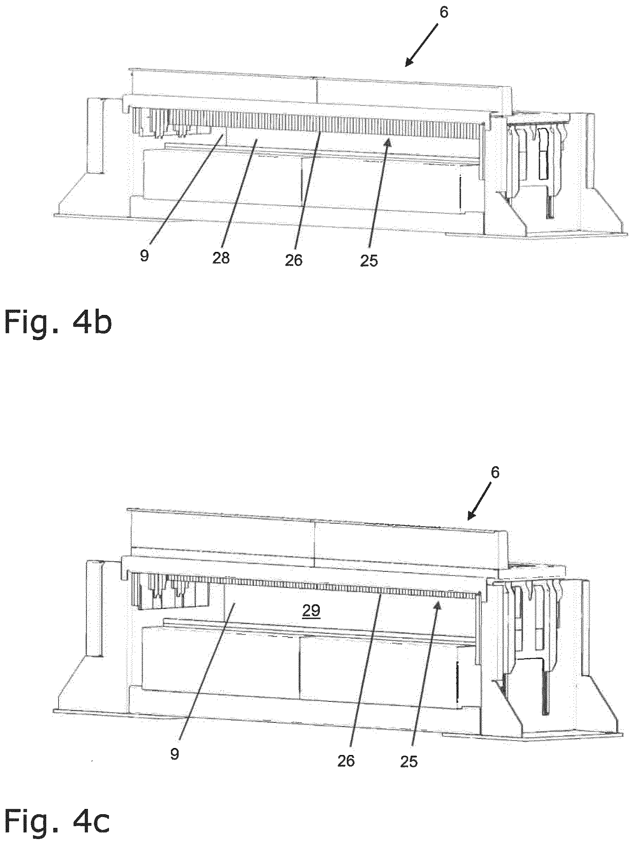

Figur 4b zeigt den einlassseitigen Laserschutzvorhang 25 in einer Bearbeitungsposition. In der Bearbeitungsposition lässt der einlassseitige Laserschutzvorhang 25 einen als Werkstück-Durchtrittsquerschnitt 28 vorgesehen Teilquerschnitt des Einlassöffnungsquerschnitts frei. In Figur 4c schließlich befindet sich der einlassseitige Laserschutzvorhang 25 in einer Werkstück-Transferposition. In der Werkstück-Transferposition gibt der einlassseitige Laserschutzvorhang 25 einen Werkstück-Transferquerschnitt 29 des Einlassöffnungsquerschnitts frei, der größer bemessen ist als der Werkstück-Durchtrittsquerschnitt 28.

Für die in Verlängerung des Arbeitsbereichs 12 der Laser-Flachbettmaschine 8 angeordnete Auslassöffnung 10 der Einhausung 3 der Bearbeitungskabine 2 ist als Verschlusselement ein auslassseitiger Laserschutzvorhang 30 vorgesehen, der hinsichtlich seiner Beschaffenheit und seiner Funktionsweise mit dem einlassseitigen Laserschutzvorhang 25 übereinstimmt. Der auslassseitige Laserschutzvorhang 30 deckt in Abhängigkeit von seiner Position einen senkrecht zu der Zufuhrrichtung 11 verlaufenden Auslassöffnungsquerschnitt der Auslassöffnung 10 mehr oder weniger ab.

Entsprechend den Verhältnissen an der Einlassseite der Bearbeitungskabine 2 sind der in der Zufuhrrichtung 11 bestehende Abstand des Laserschutzvorhangs 30 an der Auslassöffnung 10 der Bearbeitungskabine 2 von dem Arbeitsbereich 12 der Laser-Flachbettmaschine 8 und das Material des Laserschutzvorhangs 30 derart aufeinander abgestimmt, dass der Laserschutzvorhang 30 die durch die einschlägigen Sicherheitsvorschriften geforderte Standzeit erreicht.

Gemäß Figur 3 schließen sich an die bis zu der Bearbeitungskabine 2 reichenden Führungsschienen 15 für eine mit einem Blech beladene Werkstückpalette als Werkstück-Führungsvorrichtung Führungsschienenabschnitte 31 des Einlassmoduls 6 an, die in der Zufuhrrichtung 11 verlaufen. Die Führungsschienenabschnitte 31 sind zweiteilig ausgebildet und umfassen jeweils einen mit der Einhausung 3 fest verbundenen ortsfesten Längenabschnitt 32 sowie einen relativ zu dem ortsfesten Längenabschnitt 32 um eine vertikale Achse schwenkbaren Längenabschnitt 33.

Zur Führung einer mit einem Blech beladenen Werkstückpalette verlaufen die schwenkbaren Längenabschnitte 33 der Führungsschienenabschnitte 31 in Verlängerung der ortsfesten Längenabschnitte 32 und dabei an der Innenseite von Kabinentüren 34, 35 der Bearbeitungskabine 2 bzw. des Einlassmoduls 6 der Bearbeitungskabine 2. Soll etwa zu Wartungszwecken das Innere des Einlassmoduls 6 von Personal betreten werden, so lassen sich die schwenkbaren Längenabschnitte 33 der Führungsschienenabschnitte 31 zu den ortsfesten Längenabschnitten 32 hin schwenken und dadurch in eine Position überführen, in welcher sie den Zugang zu dem Inneren der Bearbeitungskabine 2 nicht behindern.

Auf die Führungsschienenabschnitte 31 des Einlassmoduls 6 folgen in der Zufuhrrichtung 11 Führungsschienenabschnitte, die in den Figuren durch die Einhausung 3 der Bearbeitungskabine 2 verdeckt sind und mittels derer eine mit einem Blech beladene Werkstückpalette in dem Arbeitsbereich 12 der Laser-Flachbettmaschine 8 geführt ist. Auf die Führungsschienenabschnitte des Arbeitsbereichs 12 der Laser-Flachbettmaschine 8 folgen schließlich in der Zufuhrrichtung 11 in den Figuren gleichfalls nicht sichtbare Führungsschienenabschnitte des Auslassmoduls 7 der Bearbeitungskabine 2, wobei die Führungsschienenabschnitte des Auslassmoduls 7 der Bearbeitungskabine 2 baugleich sind mit den Führungsschienenabschnitten 31 des Einlassmoduls 6.

Die maschinelle Anordnung 1 ist für die schneidende Bearbeitung von überformatigen Blechen ausgelegt, d. h. von Blechen, deren Abmessung in der Zufuhrrichtung 11 die entsprechende Abmessung des Arbeitsbereichs 12 der Laser-Flachbettmaschine 8 übersteigt. Ein entsprechendes Überformat gegenüber dem Arbeitsbereich 12 der Laser-Flachbettmaschine 8 weist die Werkstückpalette auf, auf welcher ein überformatiges Blech zu Bearbeitungs- und Transportzwecken gelagert ist.

Die überformatige Werkstückpalette mit dem überformatigen Blech wird ausgehend von der Startposition an dem Palettenwechsler 13 in der Zufuhrrichtung 11 in den Arbeitsbereich 12 der Laser-Flachbettmaschine 8 bewegt. Bei dieser Bewegung ist ein als Strahlquelle der Laser-Flachbettmaschine 8 vorgesehener Festkörperlaser ausgeschaltet und der einlassseitige Laserschutzvorhang 25 ist in die Werkstück-Transferposition überführt, in welcher er den Werkstück-Transferquerschnitt 29 des Einlassöffnungsquerschnitts der Einlassöffnung 9 der Einhausung 3 freigibt. Der von dem einlassseitigen Laserschutzvorhang 25 freigelassene Werkstück-Transferquerschnitt 29 ist deutlich größer als der Querschnitt der mit dem zu bearbeitenden Blech beladenen Werkstückpalette, so dass die Werkstückpalette und das Blech die Einlassöffnung 9 der Bearbeitungskabine 2 ungehindert in der Zufuhrrichtung 11 passieren können.

Der auslassseitige Laserschutzvorhang 30 befindet sich derweil in der Verschlussposition.

Haben die Werkstückpalette und das Blech mit ihrem in der Zufuhrrichtung 11 vorauseilenden Rand den in der Zufuhrrichtung 11 vorderen Rand des Arbeitsbereichs 12 der Laser-Flachbettmaschine 8 erreicht und weisen die Werkstückpalette und das zu bearbeitende Blech ein entsprechend großes Überformat gegenüber dem Arbeitsbereich 12 der Laser-Flachbettmaschine 8 auf, so reichen die Werkstückpalette und das zu bearbeitende Blech in Gegenrichtung der Zufuhrrichtung 11 durch die Einlassöffnung 9 der Bearbeitungskabine 2 hindurch bis in den einlassseitigen Einfriedungsraum 20 der einlassseitigen Laserschutzwand 17, unter Umständen sogar durch die Durchtrittsöffnung 16 der einlassseitigen Laserschutzwand 17.

Damit dessen ungeachtet in dem Arbeitsbereich 12 der Laser-Flachbettmaschine 8 eine schneidende Blechbearbeitung durchgeführt werden kann, wird der einlassseitige Laserschutzvorhang 25 ausgehend von der Werkstück-Transferposition in die Bearbeitungsposition abgesenkt. Der auslassseitige Laserschutzvorhang 30 verbleibt in der Verschlussposition.

Bei Bearbeitungsposition des einlassseitigen Laserschutzvorhangs 25 setzen dessen Lamellen 26 mit ihrem unteren Rand auf der Oberseite des zu bearbeitenden Blechs auf. Wird nun die Strahlquelle der Laser-Flachbettmaschine 8 eingeschaltet und die Laser-Flachbettmaschine 8 im Bearbeitungs- beziehungsweise Schneidmodus betrieben, so sorgt der in die Bearbeitungsposition bewegte einlassseitige Laserschutzvorhang 25 dafür, dass bearbeitungsbedingte Laserstrahlung allenfalls in einem geringen Umfang die Bearbeitungskabine 2 durch deren Einlassöffnung 9 verlassen kann. An der Auslassseite der Bearbeitungskabine 2 ist die Umgebung der maschinellen Anordnung 1 durch den in der Verschlussposition angeordneten auslassseitigen Laserschutzvorhang 30 vollständig gegen Laserstrahlung aus dem Arbeitsbereich 12 der Laser-Flachbettmaschine 8 abgeschirmt.

Laserstrahlung, die ungeachtet der Abschirmungswirkung des einlassseitigen Laserschutzvorhangs 25 aus der Bearbeitungskabine 2 austritt, gelangt in den einlassseitigen Einfriedungsraum 20 der einlassseitigen Laserschutzwand 17. Die einlassseitige Laserschutzwand 17 schirmt die Einlassöffnung 9 der Bearbeitungskabine 2 gegen die Umgebung der maschinellen Anordnung 1 vollständig ab, so dass außerhalb der einlassseitigen Laserschutzwand 17 keine für Menschen gefährliche Laserstrahlung auftritt.

An der Durchtrittsöffnung 16 der einlassseitigen Laserschutzwand 17 erfolgt die Abschirmung der Umgebung der maschinellen Anordnung 1 mittels des an der Durchtrittsöffnung 16 der einlassseitigen Laserschutzwand 17 vorgesehenen Laserschutzvorhangs, der eine Abschirmung auch dann bewirkt, wenn das in der Zufuhrrichtung hintere Ende eines in dem Arbeitsbereich 12 der Laser-Flachbettmaschine 8 bearbeiteten Blechs in Gegenrichtung der Zufuhrrichtung 11 durch die Durchtrittsöffnung 16 hindurch über die einlassseitige Laserschutzwand 17 vorsteht.

Aufgrund der Abschirmung der Umgebung der maschinellen Anordnung 1 gegen bearbeitungsbedingte Laserstrahlung können sich Personen während des Schneidbetriebs der Laser-Flachbettmaschine 8 insbesondere im Bereich des Palettenwechslers 13 aufhalten und dort hauptzeitparallel Arbeiten ausführen.

Soll ein Blech in der Zufuhrrichtung 11 über eine Länge bearbeitet werden, die größer ist als die entsprechende Erstreckung des Arbeitsbereichs 12 der Laser-Flachbettmaschine 8, so sind das Blech und die das Blech lagernde Werkstückpalette nach einer ersten in dem Arbeitsbereich 12 durchgeführten Blechbearbeitung in der Zufuhrrichtung 11 nachzusetzen.

Zu diesem Zweck wird der einlassseitige Laserschutzvorhang 25 aus der Bearbeitungsposition in die Werkstück-Transferposition angehoben. Bei einem entsprechend großen Betrag der Nachsetzbewegung wird außerdem der auslassseitige Laserschutzvorhang 30 aus der anfänglichen Verschlussposition gleichfalls in die Werkstück-Transferposition überführt, damit die Werkstückpalette und das Blech bei der Nachsetzbewegung die Auslassöffnung 10 der Einhausung 3 der Bearbeitungskabine 2 in der Zufuhrrichtung 11 passieren können.

Nach Beendigung der Nachsetzbewegung wird der auslassseitige Laserschutzvorhang 30 aus der Werkstück-Transferposition in die Bearbeitungsposition bewegt. Die Zielposition, von der ausgehend der einlassseitige Laserschutzvorhang 25 nach Beendigung der Nachsetzbewegung der Werkstückpalette und des von diesem gelagerten Blechs abgesenkt wird, hängt von dem Umfang des Überformats der Werkstückpalette und des Blechs gegenüber dem Arbeitsbereich 12 der Laser-Flachbettmaschine 8 ab. Ist das Überformat derart bemessen, dass das in der Zufuhrrichtung 11 hintere Ende der Werkstückpalette und des Blechs am Ende der Nachsetzbewegung innerhalb der Bearbeitungskabine 2 zu liegen kommt, so wird der einlassseitige Laserschutzvorhang 25 im Anschluss an die Nachsetzbewegung in die Verschlussposition überführt. Ragen die Werkstückpalette und das Blech aufgrund ihres Überformats auch noch nach Beendigung der Nachsetzbewegung entgegen der Zufuhrrichtung 11 aus der Bearbeitungskabine 2 heraus, so wird auch der einlassseitige Laserschutzvorhang 25 nach Beendigung der Nachsetzbewegung in die Bearbeitungsposition abgesenkt.

Bei Bearbeitungsposition des auslassseitigen Laserschutzvorhangs 30 und bei Verschlussposition oder Bearbeitungsposition des einlassseitigen Laserschutzvorhangs 25 wird mittels der Laser-Flachbettmaschine 8 in dem Arbeitsbereich 12 ein weiterer Schneidprozess durchgeführt.

An der Auslassseite der Bearbeitungskabine 2 hindert dabei der in der Bearbeitungsposition angeordnete auslassseitige Laserschutzvorhang 30 im Zusammenwirken mit der auslassseitigen Laserschutzwand 21 bearbeitungsbedingte Laserstrahlung an dem Austreten in die Umgebung der maschinellen Anordnung 1. An der Einlassseite der Bearbeitungskabine 2 wird die Umgebung der maschinellen Anordnung 1 durch den in die Verschlussposition oder in die Bearbeitungsposition abgesenkten einlassseitigen Laserschutzvorhang 25 und je nach Position des einlassseitigen Laserschutzvorhangs 25 auch durch die einlassseitige Laserschutzwand 17 gegen bearbeitungsbedingte Laserstrahlung abgeschirmt.

Nach Beendigung der Werkstückbearbeitung werden die Werkstückpalette und das von dieser gelagerte bearbeitete Blech entgegen der Zufuhrrichtung 11 zurück an das von der Bearbeitungskabine 2 abliegende Ende des Palettenwechslers 13 bewegt. Dabei ist der einlassseitige Laserschutzvorhang 25 und bei einem Überstand des bearbeiteten Blechs an der Auslassseite der Bearbeitungskabine 2 auch der auslassseitige Laserschutzvorhang 30 in die Werkstück-Transferposition überführt.

Zur Fertigung der maschinellen Anordnung 1 werden das Einlassmodul 6 und das Auslassmodul 7 mit einem Bearbeitungsmodul strahlungsdicht verbunden. Als Bearbeitungsmodul kann dabei das in Figur 2 dargestellte Bearbeitungsmodul 5 verbaut werden, dessen Arbeitsbereich 12 in der Zufuhrrichtung 11 in dem dargestellten Beispielsfall eine Länge von 4 Metern aufweist. Anstelle des Bearbeitungsmoduls 5 kommt für eine Kombination mit dem Einlassmodul 6 und dem Auslassmodul 7 beispielsweise auch ein Bearbeitungsmodul in Frage, dessen Arbeitsbereich in der Zufuhrrichtung 11 eine Länge von 6 Metern aufweist. Bei dem Hersteller der maschinellen Anordnung 1 können Bearbeitungsmodule mit unterschiedlicher Erstreckung in der Zufuhrrichtung 11 und außerdem Einlassmodule 6 und Auslassmodule 7 jeweils konfektioniert vorgehalten werden. Nach Eingang eines entsprechenden Kundenauftrags kann aus den unterschiedlichen Bearbeitungsmodulen das dem Kundenwunsch entsprechende Bearbeitungsmodul ausgewählt und mit einem Einlassmodul 6 sowie einem Auslassmodul 7 kombiniert werden.

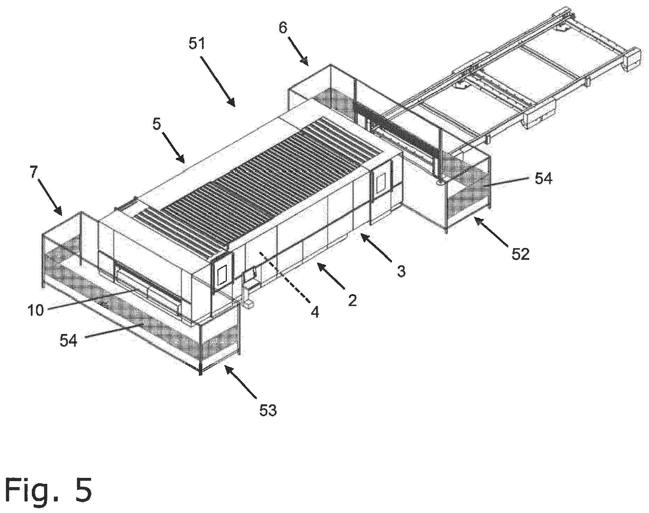

Eine in Figur 5 dargestellte maschinelle Anordnung 51 zum Laserschneiden von überformatigen Blechen unterscheidet sich von der vorstehend beschriebenen maschinellen Anordnung 1 im Wesentlichen durch die konstruktive Gestaltung einer als Strahlenschutz-Einfriedung vorgesehenen einlassseitigen Laserschutzwand 52 sowie durch die konstruktive Gestaltung einer gleichfalls als Strahlenschutz-Einfriedung vorgesehenen auslassseitigen Laserschutzwand 53. Abweichend von den durchgängig als Schutzverglasung ausgeführten Laserschutzwänden 17, 21 der maschinellen Anordnung 1 sind die Laserschutzwände 52, 53 der maschinellen Anordnung 51 lediglich über einen Teil ihrer Höhe strahlungsdicht ausgebildet.

Die Höhe eines strahlungsdichten Bereichs 54 der Laserschutzwände 52, 53 und die Position des strahlungsdichten Bereichs 54 sind derart gewählt, dass bearbeitungsbedingte Laserstrahlung, die an der in Figur 5 verdeckten Einlassöffnung der Bearbeitungskabine 2 der maschinellen Anordnung 51 und/oder an der Auslassöffnung 10 der Bearbeitungskabine 2 der maschinellen Anordnung 51 aus der Bearbeitungskabine 2 austritt, nicht in die Umgebung der maschinellen Anordnung 51 gelangen kann.

Der strahlungsdichte Bereich 54 der Laserschutzwände 52, 53 kann als beispielsweise zaunartige Sichtblende ausgeführt sein. An einem Laserschutzzaun können einander in der Umfangsrichtung der Laserschutzwände 52, 53 benachbarte lattenartige Zaunelemente senkrecht zu der Umfangsrichtung gegeneinander versetzt sein und in der Umfangsrichtung miteinander überlappen.

## Patentansprüche

1. Maschinelle Anordnung zum Bearbeiten von Werkstücken, insbesondere von Blechen, mittels Laser, mit einer Bearbeitungskabine (2), die einen Arbeitsraum (4) und eine Einhausung (3) für den Arbeitsraum (4) aufweist,
• wobei der Arbeitsraum (4) der Bearbeitungskabine (2) eine Laserbearbeitungsvorrichtung (8) mit einem Arbeitsbereich (12) aufnimmt, in welchem Werkstücke mittels der in einem Bearbeitungsmodus betriebenen Laserbearbeitungsvorrichtung (8) unter Emission von Laserstrahlung bearbeitbar sind,
• wobei die Einhausung (3) der Bearbeitungskabine (2) den Arbeitsraum (4) begrenzt und die Umgebung der Bearbeitungskabine (2) gegen Laserstrahlung aus dem Arbeitsbereich (12) der Laserbearbeitungsvorrichtung (8) abschirmt,
• wobei die Einhausung (3) der Bearbeitungskabine (2) an einer Einlassseite mit einer Einlassöffnung (9) versehen ist, durch welche mittels der Laserbearbeitungsvorrichtung (8) bearbeitbare Werkstücke in einer Zufuhrrichtung (11) in den Arbeitsraum (4) einführbar sind und die einen sich senkrecht zu der Zufuhrrichtung (11) erstreckenden Einlassöffnungsquerschnitt aufweist und
• wobei für die Einlassöffnung (9) der Einhausung (3) ein Verschlusselement (25) vorgesehen ist, welches sich parallel zu dem Einlassöffnungsquerschnitt erstreckt und welches an der Einlassöffnung (9) bei im Bearbeitungsmodus betriebener Laserbearbeitungsvorrichtung (8) in einer Bearbeitungsposition angeordnet ist,
**dadurch gekennzeichnet,**
• **dass** der Arbeitsbereich (12) der Laserbearbeitungsvorrichtung (8) in Verlängerung der Einlassöffnung (9) der Einhausung (3) in der Zufuhrrichtung (11) angeordnet ist,
• **dass** als Bearbeitungsposition des Verschlusselements (25) für die Einlassöffnung (9) der Einhausung (3) eine Position vorgesehen ist, in welcher das Verschlusselement (25) für die Einlassöffnung (9) einen als Werkstück-Durchtrittsquerschnitt vorgesehenen Teilquerschnitt des Einlassöffnungsquerschnitts freigibt und
• **dass** der Einlassöffnung (9) der Einhausung (3) in der Zufuhrrichtung (11) eine Strahlenschutz-Einfriedung (17, 52) vorgelagert ist, welche bei Bearbeitungsposition des Verschlusselements (25) für die Einlassöffnung (9) und im Bearbeitungsmodus betriebener Laserbearbeitungsvorrichtung (8) die Umgebung der Bearbeitungskabine (2) gegen Laserstrahlung aus der Einlassöffnung (9) abschirmt.

2. Maschinelle Anordnung nach Anspruch 1, **dadurch gekennzeichnet,**
• **dass** die Einhausung (3) der Bearbeitungskabine (2) an einer Auslassseite mit einer Auslassöffnung (10) versehen ist, die in Verlängerung des Arbeitsbereichs (12) der Laserbearbeitungsvorrichtung (8) in der Zufuhrrichtung (11) angeordnet ist und die einen sich senkrecht zu der Zufuhrrichtung (11) erstreckenden Auslassöffnungsquerschnitt aufweist,
• **dass** für die Auslassöffnung (10) der Einhausung (3) ein Verschlusselement (30) vorgesehen ist, welches sich parallel zu dem Auslassöffnungsquerschnitt erstreckt und welches an der Auslassöffnung (10) bei im Bearbeitungsmodus betriebener Laserbearbeitungsvorrichtung (8) in einer Bearbeitungsposition angeordnet ist, in welcher das Verschlusselement (30) für die Auslassöffnung (10) einen als Werkstück-Durchtrittsquerschnitt (28) vorgesehenen Teilquerschnitt des Auslassöffnungsquerschnitts freigibt und
• **dass** der Auslassöffnung (10) der Einhausung (3) in der Zufuhrrichtung (11) eine Strahlenschutz-Einfriedung (21, 53) nachgelagert ist, welche bei Bearbeitungsposition des Verschlusselements (30) für die Auslassöffnung (10) und im Bearbeitungsmodus betriebener Laserbearbeitungsvorrichtung (8) die Umgebung der Bearbeitungskabine (2) gegen Laserstrahlung aus der Auslassöffnung (10) abschirmt.

3. Maschinelle Anordnung nach einem der vorhergehenden Ansprüche, **dadurch gekennzeichnet, dass** das Verschlusselement (25) für die Einlassöffnung (9) der Einhausung (3) dem Arbeitsbereich (12) der Laserbearbeitungsvorrichtung (8) in der Zufuhrrichtung (11) mit einem Abstand vorgelagert ist, welcher derart bemessen ist, dass den Sicherheitsanforderungen an die Standzeit des Verschlusselements (25) für die Einlassöffnung (9) entsprochen wird und/oder dass das Verschlusselement (30) für die Auslassöffnung (10) der Einhausung (3) dem Arbeitsbereich (12) der Laserbearbeitungsvorrichtung (8) in der Zufuhrrichtung (11) mit einem Abstand nachgelagert ist, welcher derart bemessen ist, dass den Sicherheitsanforderungen an die Standzeit des Verschlusselements (30) für die Auslassöffnung (10) entsprochen wird.

4. Maschinelle Anordnung nach einem der vorhergehenden Ansprüche, **dadurch gekennzeichnet, dass** der Werkstück-Durchtrittsquerschnitt (28) des Einlassöffnungsquerschnitts und/oder der Werkstück-Durchtrittsquerschnitt (28) des Auslassöffnungsquerschnitts derart bemessen ist, dass er ein in dem Arbeitsbereich (12) der Laserbearbeitungsvorrichtung (8) bearbeitbares Werkstück gemeinschaftlich mit einem das Werkstück lagernden Werkstückträger aufnehmen kann.

5. Maschinelle Anordnung nach einem der vorhergehenden Ansprüche, **dadurch gekennzeichnet, dass** in der Zufuhrrichtung (11) zwischen der Einlassöffnung (9) der Einhausung (3) und dem Arbeitsbereich (12) der Laserbearbeitungsvorrichtung (8) und/oder zwischen dem Arbeitsbereich (12) der Laserbearbeitungsvorrichtung (8) und der Auslassöffnung (10) der Einhausung (3) eine Werkstück-Führungsvorrichtung (31) vorgesehen ist, mittels derer ein in dem Arbeitsbereich (12) der Laserbearbeitungsvorrichtung (8) bearbeitbares Werkstück bei in der Zufuhrrichtung (11) ausgeführten Werkstückbewegungen in der Zufuhrrichtung (11) geführt ist.

6. Maschinelle Anordnung nach einem der vorhergehenden Ansprüche, **dadurch gekennzeichnet, dass** das Verschlusselement (25) für die Einlassöffnung (9) der Einhausung (3) in der Bearbeitungsposition mit einem zu dem Werkstück-Durchtrittsquerschnitt (28) des Einlassöffnungsquerschnitts hin liegenden Rand auf einem den Werkstück-Durchtrittsquerschnitt (28) durchsetzenden Werkstück aufsetzt und/oder dass das Verschlusselement (30) für die Auslassöffnung (10) der Einhausung (3) in der Bearbeitungsposition mit einem zu dem Werkstück-Durchtrittsquerschnitt des Auslassöffnungsquerschnitts hin liegenden Rand auf einem den Werkstück-Durchtrittsquerschnitt (28) durchsetzenden Werkstück aufsetzt.

7. Maschinelle Anordnung nach einem der vorhergehenden Ansprüche, **dadurch gekennzeichnet, dass** als Verschlusselement (25) für die Einlassöffnung (9) der Einhausung (3) ein Strahlenschutzvorhang vorgesehen ist, der sich parallel zu dem Einlassöffnungsquerschnitt erstreckt und/oder dass als Verschlusselement (30) für die Auslassöffnung (10) der Einhausung (3) ein Strahlenschutzvorhang vorgesehen ist, der sich parallel zu dem Auslassöffnungsquerschnitt erstreckt.

8. Maschinelle Anordnung nach einem der vorhergehenden Ansprüche, **dadurch gekennzeichnet, dass** als weitere Position für das Verschlusselement (25) für die Einlassöffnung (9) der Einhausung (3) eine Werkstück-Transferposition vorgesehen ist, in welcher das Verschlusselement (25) für die Einlassöffnung (9) einen als Werkstück-Transferquerschnitt (29) vorgesehenen Teilquerschnitt des Einlassöffnungsquerschnitts freigibt, wobei der Werkstück-Transferquerschnitt (29) des Einlassöffnungsquerschnitts größer bemessen ist als der Werkstück-Durchtrittsquerschnitt (28) des Einlassöffnungsquerschnitts und/oder dass als weitere Position für das Verschlusselement (30) für die Auslassöffnung (10) der Einhausung (3) eine Werkstück-Transferposition vorgesehen ist, in welcher das Verschlusselement (30) für die Auslassöffnung (10) einen als Werkstück-Transferquerschnitt (29) vorgesehenen Teilquerschnitt des Auslassöffnungsquerschnitts freigibt, wobei der Werkstück-Transferquerschnitt (29) des Auslassöffnungsquerschnitts größer bemessen ist als der Werkstück-Durchtrittsquerschnitt (28) des Auslassöffnungsquerschnitts.

9. Maschinelle Anordnung nach einem der vorhergehenden Ansprüche, **dadurch gekennzeichnet dass** als weitere Position für das Verschlusselement (25) für die Einlassöffnung (9) der Einhausung (3) eine Verschlussposition vorgesehen ist, in welcher das Verschlusselement (25) für die Einlassöffnung (9) den Einlassöffnungsquerschnitt vollständig und vorzugsweise strahlungsdicht verschließt und/oder dass als weitere Position für das Verschlusselement (30) für die Auslassöffnung (10) der Einhausung (3) eine Verschlussposition vorgesehen ist, in welcher das Verschlusselement (30) für die Auslassöffnung (10) den Auslassöffnungsquerschnitt vollständig und vorzugsweise strahlungsdicht verschließt.

10. Maschinelle Anordnung nach einem der vorhergehenden Ansprüche, **dadurch gekennzeichnet, dass** die der Einlassöffnung (9) der Einhausung (3) vorgelagerte Strahlenschutz-Einfriedung (17, 52) einen zu der Einlassöffnung (9) der Einhausung (3) hin offenen einlassseitigen Einfriedungsraum (20) zur Aufnahme eines in dem Arbeitsbereich (12) der Laserbearbeitungsvorrichtung (8) bearbeitbaren Werkstücks mit zwei flächigen seitlichen Einfriedungsteilen (18) und mit einem flächigen stirnseitigen Einfriedungsteil (19) begrenzt, wobei die seitlichen Einfriedungsteile (18) mit in der Querrichtung der Zufuhrrichtung (11) bestehendem gegenseitigem Abstand beidseits der Einlassöffnung (9) parallel zu der Zufuhrrichtung (11) verlaufen und wobei der stirnseitige Einfriedungsteil (19) mit längs der Zufuhrrichtung (11) bestehendem Abstand von der Einlassöffnung (9) zwischen den seitlichen Einfriedungsteilen (18) senkrecht zu der Zufuhrrichtung (11) verläuft und/oder dass die der Auslassöffnung (10) der Einhausung (3) nachgelagerte Strahlenschutz-Einfriedung (21, 53) einen zu der Auslassöffnung (10) der Einhausung (3) hin offenen auslassseitigen Einfriedungsraum (24) zur Aufnahme eines in dem Arbeitsbereich (12) der Laserbearbeitungsvorrichtung (8) bearbeitbaren Werkstücks mit zwei flächigen seitlichen Einfriedungsteilen (22) und mit einem flächigen stirnseitigen Einfriedungsteil (23) begrenzt, wobei die seitlichen Einfriedungsteile (22) mit in der Querrichtung der Zufuhrrichtung (11) bestehendem gegenseitigem Abstand beidseits der Auslassöffnung (10) parallel zu der Zufuhrrichtung (11) verlaufen und wobei der stirnseitige Einfriedungsteil (23) mit längs der Zufuhrrichtung (11) bestehendem Abstand von der Auslassöffnung (10) zwischen den seitlichen Einfriedungsteilen (22) senkrecht zu der Zufuhrrichtung (11) verläuft.

11. Maschinelle Anordnung nach Anspruch 10, **dadurch gekennzeichnet, dass** der stirnseitige Einfriedungsteil (19) der der Einlassöffnung (9) der Einhausung (3) vorgelagerten Strahlenschutz-Einfriedung (17, 52) mit einer Durchtrittsöffnung (16) versehen ist, in deren Verlängerung in der Zufuhrrichtung (11) die Einlassöffnung (9) der Einhausung (3) angeordnet ist und durch die ein in dem Arbeitsbereich (12) der Laserbearbeitungsvorrichtung (8) bearbeitbares Werkstück in den einlassseitigen Einfriedungsraum (20) einführbar ist und/oder dass der stirnseitige Einfriedungsteil (23) der der Auslassöffnung (10) der Einhausung (3) nachgelagerten Strahlenschutz-Einfriedung (21, 53) mit einer Durchtrittsöffnung versehen ist, die in der Zufuhrrichtung (11) in Verlängerung der Auslassöffnung (10) der Einhausung (3) angeordnet ist und die von einem in dem Arbeitsbereich (12) der Laserbearbeitungsvorrichtung (8) bearbeitbaren und in dem auslassseitigen Einfriedungsraum (24) angeordneten Werkstück in der Zufuhrrichtung (11) durchsetzbar ist.

12. Maschinelle Anordnung nach Anspruch 11, **dadurch gekennzeichnet, dass** für die Durchtrittsöffnung (16) des stirnseitigen Einfriedungsteils (19) der der Einlassöffnung (9) der Einhausung (3) vorgelagerten Strahlenschutz-Einfriedung (17) und/oder für die Durchtrittsöffnung des stirnseitigen Einfriedungsteils (23) der der Auslassöffnung (10) der Einhausung (3) nachgelagerten Strahlenschutz-Einfriedung (21) ein Verschlusselement mit einem Strahlenschutzvorhang vorgesehen ist, der sich parallel zu einem senkrecht zu der Zufuhrrichtung (11) verlaufenden Durchtrittsöffnungsquerschnitt erstreckt und der in der Zufuhrrichtung (11) nachgiebig ist.

13. Maschinelle Anordnung nach einem der vorhergehenden Ansprüche, **dadurch gekennzeichnet, dass** die der Einlassöffnung (9) der Einhausung (3) vorgelagerte Strahlenschutz-Einfriedung (17, 52) und/oder die der Auslassöffnung (10) der Einhausung (3) nachgelagerte Strahlenschutz-Einfriedung (21, 53) Einfriedungselemente aufweist, die senkrecht zu der Umfangsrichtung der Strahlenschutz-Einfriedung (17, 52; 21, 53)gegeneinander versetzt sind und in der Umfangsrichtung der Strahlenschutz-Einfriedung (17, 52; 21, 53) miteinander überlappen.

14. Maschinelle Anordnung nach einem der vorhergehenden Ansprüche, **dadurch gekennzeichnet, dass** die Bearbeitungskabine (2) modular aufgebaut ist, indem die Bearbeitungskabine (2) ein Bearbeitungsmodul (5) sowie ein Einlassmodul (6) und/oder ein Auslassmodul (7) aufweist, wobei das Bearbeitungsmodul (5) einen den Arbeitsraum (4) mit der Laserbearbeitungsvorrichtung (8) und deren Arbeitsbereich (12) begrenzenden Teil der Einhausung (3) umfasst und zu der Einlassöffnung (9) der Einhausung (3) sowie zu der Auslassöffnung (10) der Einhausung (3) hin offen ist, wobei das Einlassmodul (6) den mit der Einlassöffnung (9) versehenen Teil der Einhausung (3) umfasst und zu dem Bearbeitungsmodul (5) der Einhausung (3) hin offen ist und wobei das Auslassmodul (7) den mit der Auslassöffnung (10) versehenen Teil der Einhausung (3) umfasst und zu dem Bearbeitungsmodul (5) der Einhausung (3) hin offen ist.

15. Verfahren zur Herstellung von maschinellen Anordnungen nach Anspruch 14, **dadurch gekennzeichnet, dass** ein Einlassmodul (6) der Bearbeitungskabine (2) und/oder ein Auslassmodul (7) der Bearbeitungskabine (2) wahlweise mit einem von mehreren Bearbeitungsmodulen (5) der Bearbeitungskabine (2) kombiniert wird, die unterschiedliche Erstreckungen in der Zufuhrrichtung (11) aufweisen.
